# EUROPEAN PATENT APPLICATION

(11) **EP 1 647 753 A1**
(43) Date of publication of application: **19.04.2006**
(21) Application number: 04747387.1
(22) Date of filing: 12.07.2004
(51) Int. Cl.: F16L 19/08

(54) **PIPE JOINT**

(30) Priority: 18.07.2003 JP 2003276938
(71) Applicant: Ihara Science Corporation, Shinagawa-ke Tokyo 1400014 (JP); DAIKIN INDUSTRIES, LTD., Osaka-shi, Osaka 530-8323 (JP)
(72) Inventor: ASAKAWA, Mamoru;, Shinagawa-ku, Tokyo; 1400014 (JP); TANAKA, Junichirou; c/o DAIKIN INDUSTRIES, LTD.,, Kusatsu-shi, Shiga; 5258526 (JP); FUJINAMI, Isao; c/o DAIKIN INDUSTRIES, LTD.,, Kusatsu-shi, Shiga; 5258526 (JP); NAKATA, Haruo; c/o DAIKIN INDUSTRIES, LTD.,, Kusatsu-shi, Shiga; 5258526 (JP)
(74) Representative: Goddar, Heinz J.
(86) International application number: PCT/JP2004/009920
(87) International publication number: WO 2005/008120

(57) **Abstract**

It is an object of the present invention to resolve problems resulting from removing a nut, pulling a pipe and a sleeve out from a joint main body, and then using these items to rejoin the pipe, that is, to resolve the problems of not being able to ensure airtightness or pressure resistance. The joint according to the present invention comprises a joint main body (1) having a joining hole (50) and an external threaded part (58), as well as a sleeve (3) and a nut (2). The nut (2) is screwed onto the external threaded part (58) in a state in which the pipe (10) and sleeve (3) are inserted through the joining hole (50), and is used to join the pipe (10) to the joining hole (50) via the sleeve (3). The sleeve (3) is tightly fitted to the pipe (10) and the joint main body (1) by the screwing of the nut (2), and is cut off through a linking part (32) that links a sleeve main body (31) and a separating part (33). The sleeve (3) can no longer join the pipe (10) to the joining hole (50) after the nut (2) is removed and the pipe (10) and the sleeve (3) are pulled out from the joining hole (50).

## Description

### TECHNICAL FIELD

The present invention relates to a pipe joint, and particularly to a pipe joint wherein a pipe and a sleeve are inserted into a junction hole in a pipe main body, and a nut is screwed onto a thread on the joint main body.

### BACKGROUND ART

Joints (pipe joints) used with fluid pipes that pass fluids through the interior are often capable of being detached to allow for easy replacement and repairs when the pipe deteriorates or when the fluid supply source deteriorates. Pipe joints have various threaded structures according to their application.

In air conditioners or the like, a refrigerant flows through a fluid pipe, and flare joints are often used as pipe joints. Recently, in view of their effects on global warming, studies or practical steps have been made to replace chlorofluorocarbon (CFC) refrigerants with carbon dioxide or alternative CFCs having a high design pressure, or with flammable hydrocarbon-based materials.

For example, when a hydrocarbon is used as the refrigerant, the pressure at which the hydrocarbon is used is about 3 MPa and the joint should withstand the same pressure as a conventionally used CFC refrigerant, but since the hydrocarbon is flammable, the requirement to prevent the refrigerant from leaking through the joint must be even more stringent than before.

Also, when carbon dioxide or an alternative CFC having a higher design pressure than that of a conventional CFC is used as the refrigerant, a pipe joint requires a higher pressure resistance than before.

Therefore, a flareless joint suitable for use at higher pressures than a flared joint must be used.

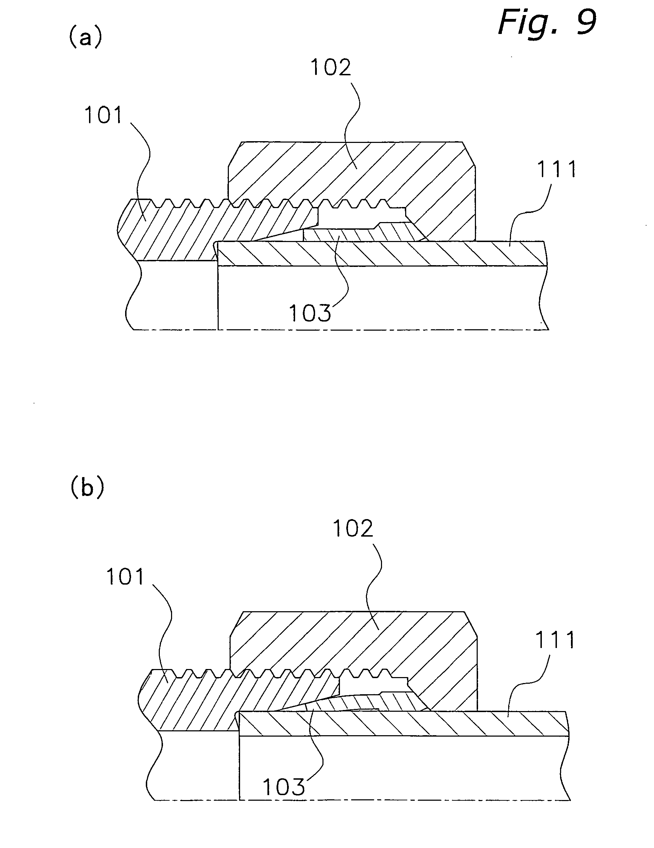

FIG. 9 shows an example of a conventional general-purpose flareless joint. FIG. 9A shows the joint before a nut 102 has been tightened, and FIG. 9B shows the joint after the nut 102 has been tightened. As shown in FIG. 9, the joint is configured from a joint main body 101, a nut 102, and a sleeve 103 provided between the two, and the structure is designed so that the distal end of the sleeve 103 is wedged onto a pipe 111 to connect the pipe 111 to the joint main body 101. Such a flareless joint has conventionally been used in thick steel pipes, but recently has come to be used to connect thin stainless steel pipes as well.

Japanese Examined Utility Model Application No. 61-26705 discloses a flareless joint used to connect thin stainless steel pipes for indoor piping. A structure is disclosed therein in which a sleeve made of a steel pipe is bent by tightening to prevent the pipe from collapsing when the distal end of the sleeve is wedged onto the pipe.

Japanese Patent Application Laid-Open No. 2001-159481 depicts a flareless joint used to connect thin gas pipes used in coolant piping for machine tools. When an O-ring and one end of a collet are inserted in the stepped portion of the joint main body, a space is formed between the end face of the joint main body and the end face of a projection provided on the outside-diameter portion of the collet. When the collet is tightened with a nut to bring the two end faces in contact with each other, a specific sealing pressure is achieved by the O-ring, and when the nut is tightened further to a specific position, a pawl provided to the inside-diameter portion of the collet is wedged onto the pipe to achieve a specific connecting force.

### DISCLOSURE OF INVENTION

Flareless joints are already being used in semiconductor manufacturing apparatuses and stainless steel piping (piping for oil hydraulics and the like) for fluids at high pressures of about 20 MPa, for example.

However, although high sealing properties can be ensured by the plastic deformation and work hardening of the metallic surfaces when the flareless joint is initially fastened, when the joint is reused after having been removed, the sealing strength may be less than during the initial fastening, and the joint may leak as a result of loosening over time due to expansion/contraction or vibration caused by temperature changes.

Accordingly, reusing the flareless joint should be avoided, but when the pipe is pulled out in a conventional flareless joint, the nut is removed and the pipe and the sleeve wedged onto the pipe are pulled out together. When an action that is the opposite of removal is performed, the condition in which the pipe is connected by the joint is restored. The flareless joint can thus be reused after it has been removed, and therefore it may not be possible to ensure airtightness and pressure resistance in the joint portion when the joint is reused.

It is an object of the present invention to resolve the problems resulting from removing the nut from the joint main body and pulling the pipe and sleeve out from the joint main body and then using these items to rejoin the pipe, that is, to resolve the problems of not being able to ensure airtightness or pressure resistance.

A pipe joint according to a first aspect comprises a joint main body, a sleeve, and a nut. A joining hole and a threaded part are formed in the joint main body. The joining hole is a hole formed in the joint main body for detachably joining the pipe. The nut is screwed onto the threaded part when the pipe and sleeve are inserted through the joining hole, and the pipe is joined to the joining hole via the sleeve. The sleeve is tightly fitted over the pipe and the joint main body by the screwing of the nut over the threaded part, and has at least a part cut off. The sleeve is designed so that after the nut is removed from the threaded part and the pipe and sleeve are pulled out from the joining hole, the pipe cannot be joined to the joining hole by the nut.

In this arrangement, the pipe and sleeve are inserted through the joining hole in the joint main body, and the nut is screwed onto the threaded part on the joint main body, whereby the sleeve is tightly fitted to the pipe and the joint main body, and the pipe is joined to the joint main body. For example, fixing or joining another pipe to the joint main body in advance allows the other pipe and the pipe joined to the joining hole in the joint main body to be connected in a state that ensures airtightness and pressure resistance.

At least part of the sleeve is cut off by the screwing of the nut onto the threaded part of the joint main body when the pipe is joined to the joint main body. Thus, as a result of the sleeve being cut, after the nut is removed from the threaded part and the pipe and sleeve are pulled out from the joining hole, the sealing properties can no longer be ensured if an attempt is made to join the pipe to the joining hole using this sleeve. For example, using the sleeve in which a part has been cut off to attempt to join the pipe to the joining hole of the joint main body and to screw on the nut will cause the joint main body and the pipe to become unstable, will allow the space inside the pipe and the joint main body to communicate with the outside via the missing portion that has been cut off from the sleeve even if the nut is screwed on to a specific location, and will make it impossible to ensure the sealing properties any longer.

Therefore, it will be clear to the operator who is joining the pipes that the sealing properties cannot be ensured, and hence the operator will not reuse a cut sleeve that has already been used, but will decide to join the pipes with a new sleeve. It is thereby possible to eliminate the problems resulting from rejoining the pipe by using the pipe and sleeve after the nut has been removed from the joint main body to pull the pipe and sleeve out from the joint main body, or, specifically, the problem of not being able to ensure airtightness or pressure resistance.

In the pipe joint according to a second aspect, in addition to the pipe joint according to the first aspect, a sleeve main body, a separating part, and a linking part are formed in the sleeve. The separating part is cut off and separated from the sleeve main body by the screwing of the nut onto the threaded part. The linking part binds together the sleeve main body and the separating part.

Since a separating part that is cut off and separated from the sleeve main body by the screwing of the nut onto the threaded part is provided to the sleeve, part of the sleeve is missing (the separating part is missing) after the separating part is separated. Therefore, it is difficult to join a pipe to the joining hole by using a sleeve from which the separating part has been separated.

The pipe joint according to a third aspect, in addition to the pipe joint according to the second aspect, has a structure in which a shearing force is applied to the linking part. Therefore, the linking part is severed by the screwing of the nut onto the threaded part, and the separating part can be more reliably separated from the sleeve main body.

In the pipe joint according to a fourth aspect, in addition to the pipe joint according to the second aspect or the third aspect, the separating part is a ring-shaped portion divided in at least three parts in the circumferential direction.

The separating part referred to herein is divided into at least three parts. Therefore, the separating part is divided into three or more parts and is separated from the pipe without catching on and remaining on the pipe when the pipe and sleeve are pulled out from the joint main body after the sleeve main body and the separating part are separated. If the separating part were ring-shaped and not divided in the circumferential direction, and if the ring-shaped separating part were to catch on and remain on the pipe when the pipe and sleeve are pulled out from the joint main body, then the operator would think that the pipe and sleeve could be joined in the same manner as before when reinserting the used pipe and sleeve main body into the joining hole in the joint main body. However, since the separating part is reliably separated from the pipe when the pipe and sleeve are pulled out from the joint main body, the operator can see more clearly that the sleeve has been broken and can no longer be used.

In the pipe joint according to a fifth aspect, in addition to the pipe joint according to any one of the first aspect through the fourth aspect, an opposing surface that faces the side surface of the nut when the nut is screwed onto the threaded part is formed in the joint main body. In this pipe joint, an appropriate tightening torque for screwing the nut onto the threaded part is set according to the dimensions of the gap between the side surface of the nut and the opposing surface of the joint main body.

The tightening torque can herein be adjusted according to the dimensions of the gap between the side surface of the nut and the opposing surface of the joint main body. For example, the tightening torque can be adjusted using a clearance gauge, or the tightening torque can be appropriately set when the side surface of the nut and the opposing surface of the joint main body come into contact with each other.

In the pipe joint according to a sixth aspect, in addition to the pipe joint according to any of the first aspect through the fifth aspect, the pipe is a copper pipe or a thin stainless steel pipe.

### BRIEF DESCRIPTION OF DRAWINGS

FIG. 1 is a partial cross-sectional side view of a flareless joint according to an embodiment of the present invention;
FIG. 2 is a partial cross-sectional side view of a joint main body;
FIG. 3 is a partial cross-sectional side view of a sleeve;
FIG. 4 is a diagram as seen along arrow IV-IV in FIG. 3;
FIG. 5 is a partial cross-sectional side view of a nut;
FIG. 6 is a partial cross-sectional side view showing the joined state of the flareless joint;
FIGS. 7A, 7B, and 7C are diagrams showing the transition of the states of the sleeve;
FIG. 8 is a partial cross-sectional side view showing the state of the flareless joint when the pipe and sleeve have been pulled out from the joint main body after having been used once; and
FIG. 9A is a cross-sectional side view showing a conventional general-purpose flareless joint before the nut is tightened, and FIG. 9B is a cross-sectional side view showing a conventional general-purpose flareless joint after the nut is tightened.

### DESCRIPTION OF THE REFERENCE SYMBOLS

- 1: joint main body
- 2: nut
- 2a: side surface of the nut
- 3: sleeve
- 6a: side surface of a nut portion of the joint main body (opposing surface)
- 10: pipe
- 31: sleeve main body
- 32: linking part
- 33: separating part
- 50: joining hole
- 58 8: external threaded part of the joint main body (threaded part)
- F2: shearing force
- H: gap between the side surface of the joint main body and the side surface of the nut

### BEST MODE OFR CARRYING OUT THE INVENTION

### <OVERALL CONSTITUTION>

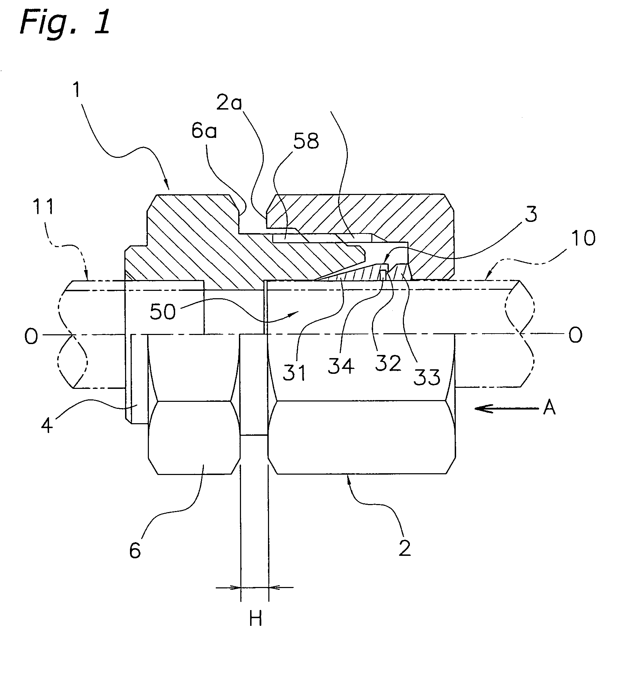

The pipe joint (flareless joint) according to one embodiment of the present invention has a joint main body 1, a nut 2, and a sleeve 3, as shown in FIG. 1. The joint of this embodiment is used to splice pipes 10 and 11, which are copper pipes or thin stainless steel pipes, and the pipe 10 is detachably joined to a joining hole 50 (described later) in the joint main body 1.

### (Constitution of joint main body 1)

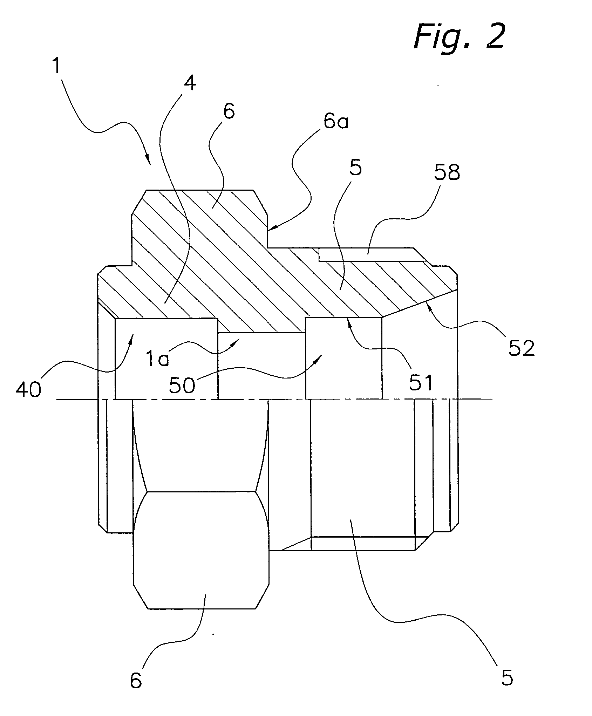

The joint main body 1 is configured from a socket 4 with the pipe 11 inserted through the an internal hole 40 and brazed, a pipe connector 5 for connecting the pipe 10, and a nut portion 6 provided to the external periphery, as shown in FIGS. 1 and 2. A side surface 6a of the nut portion 6 constitutes the opposing surface that faces a side surface 2a of a nut 2, described later.

The pipe connector 5 has a joining hole forming part for forming the joining hole 50 in the interior, as shown in FIG. 2. This joining hole forming part is configured from a pillar 51 and a joining part 52. The pillar 51 has an inside diameter substantially equal to the outside diameter of the pipe 10. The joining part 52 is a portion for wedging a distal end part 31a onto the pipe 10 by a tight fit with the distal end part 31a (described later) of the sleeve 3, the joining part is positioned on the right side of the pillar 51 in FIG. 2 with the inner surface inclined towards the center axis O-O at an angle of 10° to 30° (20° in this case), and the diameter of the inner surface gradually increases away from the pillar 51. Also, an external threaded part 58 threadably engaged with the nut 2 is formed on the outer surface of the pipe connector 5.

The joining hole 50 is communicated with the internal hole 40 in the socket 4 via an internal space 1 a in the joint main body 1.

### (Constitution of nut 2)

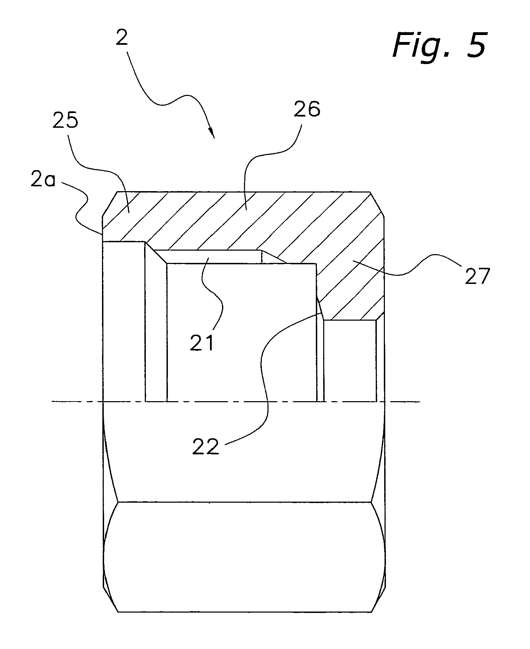

The nut 2 is configured from a cylindrical front part 25, a middle part 26, and a back part 27, as shown in FIG. 5. The inside diameter of the front part 25 is greater than the inside diameter of the middle part 26, and the inside diameter of the back part 27 is less than the inside diameter of the middle part 26.

The side surface 2a of the front part 25 of the nut 2 faces the side surface 6a of the nut portion 6 of the joint main body 1 when the nut 2 is screwed onto the joint main body 1.

An internal threaded part 21 that threadably engages with the external threaded part 58 of the joint main body 1 is formed in the internal peripheral surface of the middle part 26 of the nut 2.

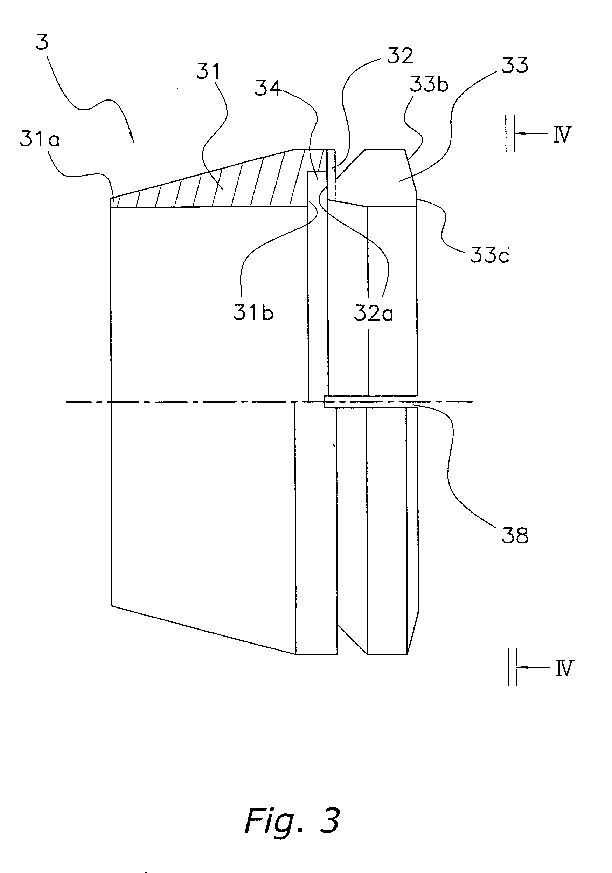

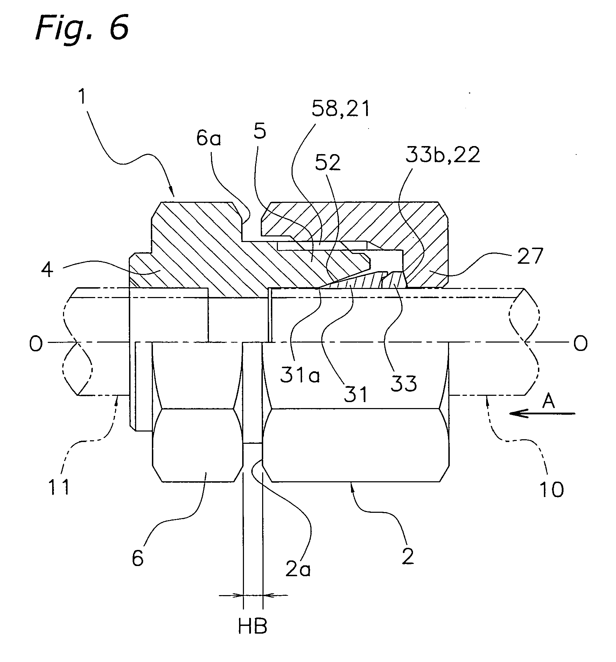

An inclined surface 22 that serves to press on a back end inclined surface 33b of the separating part 33 of the sleeve 3 shown in FIG. 3 in the direction of insertion (the direction of arrow A in FIGS. 1 and 6) is formed on the side surface of the back part 27 on the side of the middle part 26 of the nut 2. The inclined surface 22 is inclined towards the center axis O-O by about 115°, which is roughly the same angle of inclination as the back end inclined surface 33b of the sleeve 3.

### (Constitution of sleeve 3)

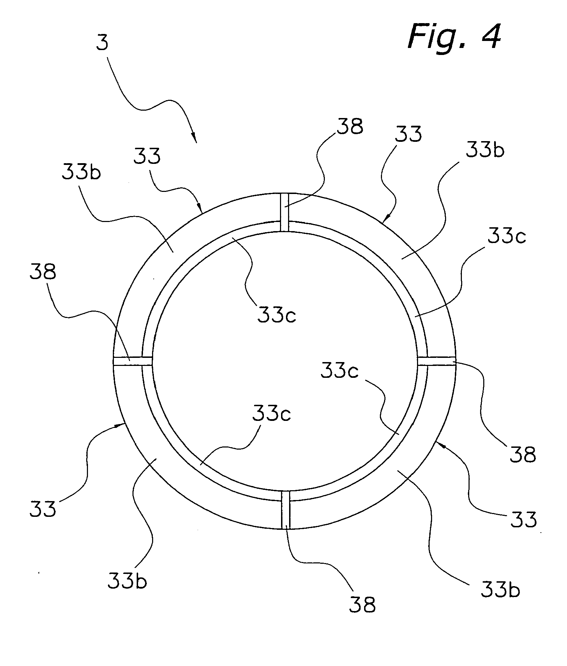

The sleeve 3 shown in FIGS. 3 and 4 is configured primarily from a sleeve main body 31, a linking part 32, and a separating part 33.

The inner surface of the sleeve main body 31 is not inclined to the outer surface of the pipe 10 and is disposed facing the outer surface of the pipe 10. The outer surface of the sleeve main body 31 faces the joining part 52 of the joint main body 1, and is inclined with a gentler angle of inclination (about 10° in this case) than the angle of inclination of the joining part 52 towards the center axis O-O.

The distal end part 31a of the sleeve main body 31 is tightly fitted to the joining part 52 of the joint main body 1, and is wedged onto the pipe 10.

The linking part 32 and the separating part 33 are positioned behind the sleeve main body 31 (at the back in the direction of insertion indicated by arrow A in FIGS. 1 and 6), and are divided equally into four parts in the circumferential direction by slits 38.

The inside diameter of the separating part 33 is approximately the same dimension as the inner surface of the sleeve main body 31, and the outside diameter of the separating part 33 is approximately the same dimension as the maximum outside diameter of the sleeve main body 31. The front side portion of the separating part 33 is compressed so that the inner surface and outer surface are both smaller in diameter, and the outer surface of the separating part 33 and the side surface at the back of the linking part 32 constitute a notch whose cross section is in the shape of an isosceles right triangle when the sleeve 3 is viewed from the external peripheral side. Also, the front surface 32a of the linking part 32 forms the side surface of a circular internal peripheral surface concavity 34 together with the back surface 31b of the opposing sleeve main body 31. The internal peripheral surface concavity 34 is formed so as to be concave as seen from the inner surface of the sleeve 3. Furthermore, the back surface of the separating part 33 is configured from an arcuate surface 33c perpendicular to the center axis on the internal peripheral side, and a pressed inclined surface 33b that is inclined in relation to the arcuate surface 33c by about 25° on the external peripheral side.

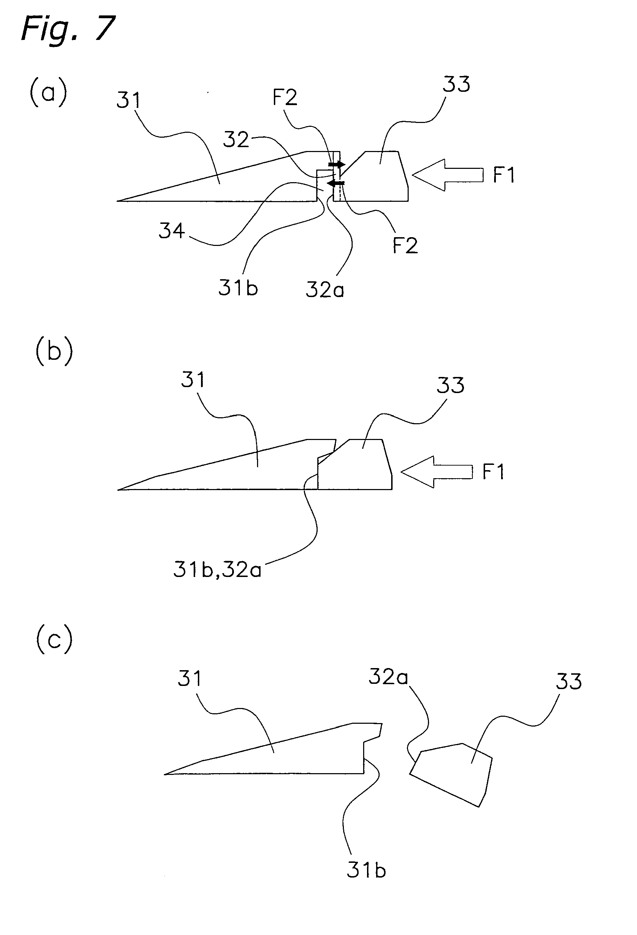

The linking part 32 connects the back end of the sleeve main body 31 disposed on the external peripheral side of the internal peripheral surface concavity 34 and the front end of the separating part 33. Also, each linking part 32 is subjected to the action of shearing force and is cut off when compressive force is applied from the nut 2 so that the sleeve main body 31 and the separating part 33 draw near to each other in the axial direction, as will be described later (refer to arrow F2 in FIGS. 7A and 7B). When the linking part 32 is thus cut off, each separating part 33 connected to the sleeve main body 31 via the linking part 32 separates from the sleeve main body 31.

### <OPERATION OF JOINING PIPE 10 TO JOINT MAIN BODY 1>

FIG. 1 shows a flareless joint prior to tightening. As shown herein, in this flareless joint, first the pipe 10 and the sleeve 3 are inserted through the joining hole 50 in the joint main body 1 in the direction of insertion (the direction of arrow A in FIG. 1), and the nut 2 is rotated to push the sleeve 3 forward (to the left in FIG. 1) by pressing on the pressed inclined surface 33b of the sleeve 3 with the inclined surface 22 of the back part 27 of the nut 2. A compressive force F 1 thereby acts on the sleeve 3 so that the sleeve main body 31 and the separating part 33 draw near to each other in the axial direction, and a shearing force F2 acts on the linking part 32 due to the compressive force F1 (see FIG. 7A).

When the nut 2 continues to be rotated, the distal end part 31 a of the sleeve 3 comes into contact with the joining part 52 of the joint main body l. At this point (during the state shown in FIG. 1), the gap H (see FIG. 1) between the side surface 6a of the nut portion 6 and the side surface 2a of the nut 2 of the joint main body 1 is set to the adequate dimensions or greater. The nut 2 is tightened with a pawl wrench or a monkey wrench until the gap H reaches the specific adequate dimensions, at which point the nut 2 reaches a state of being tightened on the joint main body 1 with an adequate fastening torque. Thus, it is possible herein to confirm the tightening torque according to the gap H between the side surface 6a of the nut portion 6 and the side surface 2a of the nut 2 of the joint main body 1. The specific adequate dimension mentioned above is set to the dimension HB shown in FIG. 6.

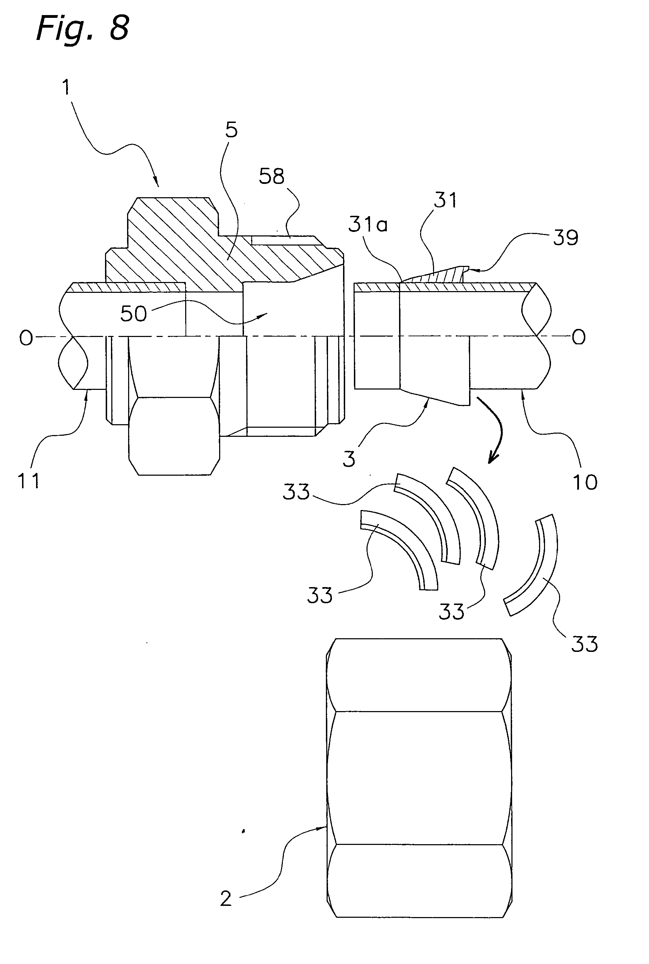

Also, when the nut 2 continues to be rotated and is tightened on the joint main body 1, the distal end part 31a of the sleeve 3 is tightly fitted over the pipe 10 and the joint main body 1, and the linking part 32 under the action of the shearing force F2 is cut off. Specifically, the linking part 32 is cut off by the shearing force F2 shown in FIG. 7A, the sleeve 3 loses the internal peripheral surface concavity 34, and the front surface 32a of the linking part 32 comes directly in contact with the back surface 31b of the sleeve main body 31, as shown in FIG. 7B. When the nut 2 is then removed from the joint main body 1, the separating part 33 divided into four parts falls off of the sleeve main body 31, as shown in FIG. 7C (see also to FIG. 8).

Finally, when the nut 2 is screwed onto the joint main body 1 until the gap H between the side surface 6a of the nut portion 6 and the side surface 2a of the nut 2 of the joint main body 1 reaches the specific adequate dimension (HB), the distal end part 31a of the sleeve 3 is tightly fitted onto the pipe 10 and is pressed on and wedged onto the surface of the pipe 10. On the other hand, the outer surface of the distal end part 31a of the sleeve 3 and the joining part 52 of the joining hole 50 are tightly fitted to prevent fluid leakage by metal contact. Thus, the distal end part 31a is wedged onto the surface of the pipe 10, and the outer surface of the distal end part 3 1 a and the joining part 52 of the joining hole 50 are sealed by metal contact, whereby the pipe 10 is joined to the joint main body 1 in a leakage-free state. Also, the distal end part 31a of the sleeve 3 is wedged onto the surface of the pipe 10, integrating the pipe 10 and the sleeve 3 into an assembly.

When the nut 2 is removed from the external threaded part 58 of the joint main body 1, and the assembly having the pipe 10 and the sleeve 3 is pulled out from the joining hole 50 of the joint main body 1, the separating part 33 divided into four parts separates from the sleeve main body 31 as described above. As a result, the sleeve main body 31 remains wedged on the pipe 10, and each separating part 33 separates form the sleeve main body 31 and falls off from the pipe 10 (see FIG. 8). In FIG. 8, a fractured surface 39 can be seen on the back end of the sleeve main body 31 that remains wedged on the pipe 10.

The separating part 33 falls off and only the sleeve main body 31 remains of the sleeve 3 once the pipe 10 and the sleeve 3 are thus pulled out from the joining hole 50 of the joint main body 1. Therefore, if the sleeve 3 (sleeve main body 31) and the pipe 10 are then mounted back in the joining hole 50 of the joint main body 1, and the nut 2 is screwed back on, a joined state with secure sealing properties cannot be achieved, and it will be clear from a seal test or the like that the fluids in the joint will leak. Before that happens, it is unlikely that the operator will try to reuse the sleeve 3 (sleeve main body 31) from which the separating part 33 has fallen off to expose the fractured surface.

### <CHARACTERISTICS OF FLARELESS JOINT OF PRESENT EMBODIMENT>

(1)
   In this joint, the screwing of the nut 2 onto the external threaded part 58 of the joint main body 1 when the pipe 10 is joined to the joint main body 1 will cause a shearing force F2 to be applied to the linking part 32 of the sleeve 3, and the linking part 32 to be cut off. Cutting the sleeve 3 between the sleeve main body 31 and the separating part 33 in this manner will prevent sealing properties from being ensured if an attempt is made to join the pipe 10 to the joining hole 50 using the sleeve 3 in which the separating part 33 has fallen off and only the sleeve main body 31 remains after the nut 2 is removed from the joint main body 1 and the pipe 10 and sleeve 3 are pulled out from the joining hole 50. Specifically, the joint main body 1 and the pipe 10 become unstable if the nut 2 is screwed back on in this condition. Therefore, an operator attempting to join the pipe 10 to the joint main body 1 will not reuse an already used and cut sleeve 3, and will decide to join the pipe 10 using new components. This makes it possible to eliminate the problems resulting from rejoining the pipe 10 by using the pipe 10 and the sleeve 3 after the nut 2 has been removed from the joint main body 1 to pull the pipe and the sleeve out from the joint main body 1, that is, the problem of not being able to ensure airtightness or pressure resistance.
(2)
   This joint is configured so that a shearing force F2 is applied to the linking part 32 that links the sleeve main body 31 and the separating part 33. Therefore, the linking part 32 is torn and cut off by the screwing of the nut 2 onto the joint main body 1, and the separating part 33 reliably separates from the sleeve main body 31 when the pipe 10 and the sleeve 3 are pulled out from the joint main body 1.
(3)
   In this joint, the separating part 33 of the sleeve 3 is divided into four parts. Therefore, the separating part 33 is divided into four parts and is separated from the pipe 10 without catching on and remaining on the pipe 10 when the assembly having the pipe 10 and the sleeve 3 is pulled out from the joint main body 1 after the sleeve main body 31 and the separating part 33 are separated.
   If the separating part 33 were ring-shaped and not divided in the circumferential direction, and if the ring-shaped separating part 33 were to catch on and remain on the pipe 10 when the pipe 10 and the sleeve 3 are pulled out from the joint main body 1, then the operator would think that the separating part 33 were attached and the pipe 10 and sleeve 3 could be joined in the same manner as before when reinserting the used pipe and the used sleeve main body 31 into the joining hole 50 in the joint main body 1.
   However, since the separating part 33 is reliably separated from the pipe 10 when the pipe 10 and the sleeve 3 are pulled out from the joint main body 1, the operator can see more clearly that the sleeve 3 has been broken and can no longer be used.
(4)
   In this joint, an adequate tightening torque for when the nut 2 is screwed onto the external threaded part 58 of the joint main body 1 can be adjusted according to the gap H between the side surface 2a of the nut 2 and the side surface 6a of the nut portion 6 of the joint main body 1. Therefore, the tightening torque can be managed if a clearance gauge is used.
(5)
   A flareless joint such as the one described above is particularly advantageous when used as a pipe joint in a refrigeration unit or an air conditioner in which an alternative CFC is used at a high service pressure. Specifically, when used as the joint of a pipe that has a service pressure of 1 MPa or greater, or even 2 MPa or greater, the joint has effective airtightness and pressure resistance.
   Also, when the joint is used in the piping of a refrigeration unit or an air conditioner, greater pressure resistance than normal is required because of severe temperature changes and pressure changes in the refrigerant, but these stringent requirements can be met by using the joint according to the present embodiment. Particularly, the joint according to the present embodiment has effective airtightness and pressure resistance in a refrigeration unit or air conditioner in which the temperature changes are at least 10°C or greater and the pressure changes are 0.3 MPa or greater, or in which the temperature changes are 20°C or greater and the pressure changes are 0.5 MPa or greater under normal conditions.

### <MODIFICATIONS>

(A)
   In the flareless joint of the embodiment described above, the linking part 32 and the separating part 33 of the sleeve 3 are divided into four parts in the circumferential direction by slits 38, but the linking and separating parts may also be divided into three, five, or a greater number of parts as long as they fall off of the pipe 10 when cut off and separated from the sleeve main body 31.
   It is also feasible to divide the separating part 33 into two parts in cases in which the size or shape of the slits 38 is designed so that the pieces reliably fall off from the sleeve main body 31 after being cut off.
   Furthermore, the separating part 33 need not necessarily be divided when the configuration is designed so that the operator can easily perceive that the sleeve main body 31 and the separating part 33 have been cut off and the sleeve 3 can no longer be used.
(B)
   In the flareless joint of the embodiment described above, the sleeve 3 is configured so that the separating part 33 divided into four parts falls off from the sleeve main body 31 as a result of the linking part 32 being cut off when the nut 2 is screwed onto the joint main body 1. Another possibility is a configuration in which part of the sleeve 3 is cut off but no portion separates when the nut 2 is screwed onto the joint main body 1. This case also eliminates the possibility of the sleeve 3 being used as a device for joining the pipe 10 and the joint main body 1 after the pipe 10 and the sleeve 3 have been pulled out from the joining hole 50 of the joint main body 1. This is achieved by designing the joint so that internal fluids clearly leak from the cut portion of the sleeve 3 during the rejoining of the pipe 10 and the sleeve 3 onto the joint main body 1 with the nut 2, or by designing the joint so that the operator can clearly see from the partially cut sleeve 3 that the sleeve 3 can no longer be used.
(C)
   In the embodiment described above, the separating part 33 falls off and only the sleeve main body 31 of the sleeve 3 remains, whereby the joint main body 1 and the pipe 10 become unsteady if the nut 2 is screwed back on. Therefore, an operator attempting to join the pipe 10 to the joint main body 1 will not reuse an already used and cut sleeve 3, and will decide to join the pipe 10 using new components.
   Instead of this configuration, it is also feasible to cut the sleeve 3 in another location and to configure the sleeve 3 so that leaks occur through a missing portion missing formed by cutting the sleeve 3 if the nut 2 is screwed back on to a specific location during rejoining. In this case, the fluids in the pipe 10 will clearly leak from the missing portion, and an operator joining the pipe 10 will more reliably perceive that sealing properties cannot be ensured.

### INDUSTRIAL APPLICABILITY

When the pipe joint according to the present invention is used, an operator joining the pipe will not rejoin an already used and cut sleeve and will decide to join the pipe using new components because sealing properties can clearly not be ensured. It is thereby possible to resolve the problems resulting from removing the nut from the joint main body, pulling the pipe and the sleeve out from the joint main body, and then using these items to rejoin the pipe, that is, to resolve the problems of not being able to ensure airtightness or pressure resistance.

## Claims

1. A pipe joint, comprising:
a joint main body wherein a joining hole for joining a pipe is formed on the inside, and a threaded part is formed on the outer surface;
a sleeve; and
a nut that is screwed onto said threaded part in a state in which said pipe and said sleeve are inserted through said joining hole, and that joins said pipe to said joining hole via said sleeve; wherein
said sleeve is tightly fitted on said pipe and said joint main body by the screwing of said nut onto said threaded part, and at least part thereof is cut off, and after said nut is removed from said threaded part and said pipe and said sleeve are pulled out from said joining hole, insertion of said pipe into said joining hole becomes impossible.

2. The pipe joint as recited in Claim 1, wherein
said sleeve is provided with a sleeve main body, a separating part that is cut off and
separated from said sleeve main body by the screwing of said nut onto said threaded part, and a linking part for linking said sleeve main body and said separating part.

3. The pipe joint as recited in Claim 2, wherein
the structure is designed so that a shearing force is applied to said linking part by the screwing of said nut onto said threaded part.

4. The pipe joint as recited in Claim 2 or 3, wherein
said separating part is a ring-shaped portion divided into at least three parts in the circumferential direction.

5. The pipe joint as recited in any of Claims 1 through 4, wherein
an opposing surface that faces the side surface of said nut when said nut is screwed onto said threaded part is formed in said joint main body; and
an appropriate tightening torque for screwing said nut onto said threaded part is set according to the dimensions of the gap between the side surface of said nut and said opposing surface of said joint main body.

6. The pipe joint as recited in any one of Claims 1 through 5, wherein
said pipe is a copper pipe or a thin stainless steel pipe.
